# EUROPEAN PATENT APPLICATION

(11) **EP 2 897 084 A1**
(43) Date of publication of application: **22.07.2015**
(21) Application number: 14151763.1
(22) Date of filing: 20.01.2014
(51) Int. Cl.: G06K 19/077, G06F 3/02, H04B 5/00, D02G 1/16, D03D 15/00, D03D 1/00, D04B 1/14, H01Q 1/27

(54) **Structure of textile**

(71) Applicant: King's Metal Fiber Technologies Co., Ltd., Taichung City (TW)
(72) Inventor: Huang, Hong-Hsu, Taipei City (TW); Chen, Reng-Sho, Taipei City (TW); Su, I-Chen, Taipei City (TW)
(74) Representative: Viering, Jentschura & Partner Patent- und Rechtsanwälte

(57) **Abstract**

The present invention relates to a textile structure (1), which includes two yarns (10), a radio frequency identification (RFID) chip (11), and two antennas (12). The antennas (12) are each electrically connected with the RFID chip (11). The antennas (12) are respectively combined with the yarns (10). As such, with the combination of the yarns (10) with the antennas (12), no tactile perception of irregularity will be sensed when a user touches and also, the comfortableness of wearing can be enhanced.

## Description

### FIELD OF THE INVENTION

The present invention relates to a structure of a textile, and in particular to a structure of a textile that is formed of a combination of two yarns, a radio frequency identification (RFID) chip, and two antennas.

### BACKGROUND OF THE INVENTION

Radio frequency identification (RFID) technology is a non-contact automatic identification technique, which enables automatic identification of and retrieval of related data an article through radio frequency signals. Although requiring a higher manufacturing cost than the traditional barcodes, RFID possesses various advantages that the barcodes do not provide, such as water resistance, magnetism resistance, low temperature resistance, extended life span, extended range of access, and ease of modification of data stored in RFID tags. The general technique of RFID is to establish bi-directional non-contact data transmission between a reader and a tag in radio frequency based wireless manner in order to realize the purposes of target identification and data exchange. RFID has been widely used in various diversified fields, such as industry automation, business automation, and control and management of traffic transportation. RFID tags have been widely used in fee charge systems of pubic transportation and subways, fee charging of parking lots, doorway access systems, attendance checking systems, and consumers shopping. A conventional way that applies RFID to clothing business is to inlay or embed a combination of an RFID chip and an antenna in a textile. Such a conventional way of combining the RFID antenna with a textile generally suffers a major disadvantage that the RFID antenna may get broken or split when clothing is washed or stretched. Another disadvantage is that the clothing with the RFID combined therein may cause perception of discomfort of irregularity. These disadvantages simply lead to deviation from the expected functionality and achievement of the inclusion of RFID in clothing. Thus, it is desired to provide an improvement for securely combining RFID in yarns to enable the use thereof in clothing, while ensuring comfortableness of wearing the clothing.

In view of the above, the present invention aims to provide a solution to overcome and address such problems.

### SUMMARY OF THE INVENTION

An object of the present invention is to provide a structure of a textile, which comprises a combination of two yarns, a radio frequency identification (RFID) chip, and two antennas, wherein the RFID chip is combined with the yarns in a neat and flat manner so that when touching, a user senses no tactile perception of irregularity so as to enhance comfortableness of wearing.

To achieve the above object, the present invention provides a textile structure, which comprises two yarns; an RFID chip; and two antennas, which are each electrically connected with the RFID chip. The antennas are respectively combined with the yarns.

The textile structure described above further comprises a protection layer, which encloses the RFID chip and is extended to the antennas.

In the textile structure described above, the protection layer is extended to cover the yarns.

In the textile structure described above, the antennas are soldered to the RFID chip.

In the textile structure described above, the antennas are pressed to fix to the RFID chip.

In the textile structure described above, the antennas bonded to the RFID chip.

In the textile structure described above, the antennas are laminated to the RFID chip.

In the textile structure described above, the antennas are respectively twisted with the yarns to form strands.

### BRIEF DESCRIPTION OF THE DRAWINGS

The present invention will be apparent to those skilled in the art by reading the following description of preferred embodiments thereof with reference to the drawings, in which:
Figure 1 is a schematic, partial enlarged view showing a structure of a textile in accordance with a first embodiment of the present invention;
Figure 2 is a schematic, partial enlarged view showing a structure of a textile in accordance with a second embodiment of the present invention;
Figure 3 is a schematic, partial enlarged view showing a structure of a textile in accordance with a third embodiment of the present invention;
Figure 4 is a schematic view showing an example of application of the structure of the textile in accordance with the present invention; and
Figure 5 is another schematic view showing an example of application of the structure of the textile in accordance with the present invention.

### DETAILED DESCRIPTION OF THE PREFERRED EMBODIMENTS

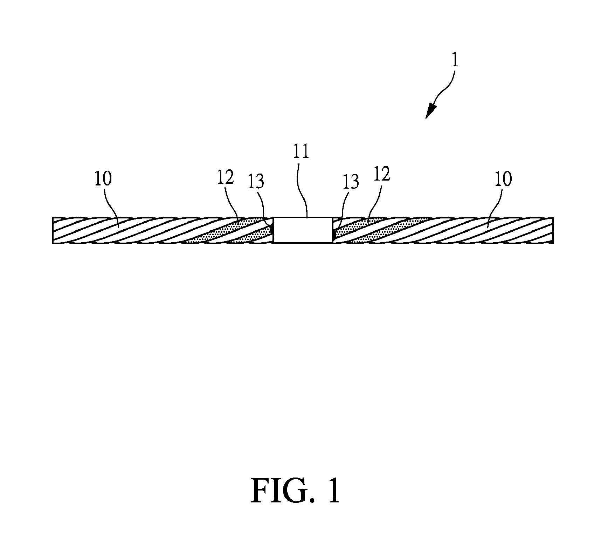

Figure 1 is a schematic, partial enlrged view of a struture of a textile according to a first embodiment of the present invention. As shown in Figure 1, the textile structure 1 comprises:

two yarns 10, a radio frequency identification (RFID) chip 11, and two antennas 12, wherein the antennas 12 are each electrically connected to the RFID chip 11 and connections between the antennas 12 and the RFID chip 11 each form a connection point 13 and the antennas 12 are respectively combined with the yarns 10.

In the instant embodiment, the antennas 12 are each twisted with the yarn to form a strand; otherwise an end of each of the antennas 12 is electrically connected to the RFID chip 11, while another end connected to the yarn 10, where the electrical connection between the antennas 12 and the RFID chip 11 can be for example soldering, press-to-fix, bonding, or laminating. However, the description given above is just a preferred embodiment of the present invention and should not be interpreted to constrain the scope of the present invention. In a practical application, other suitable means may be taken to achieve the electrical connection.

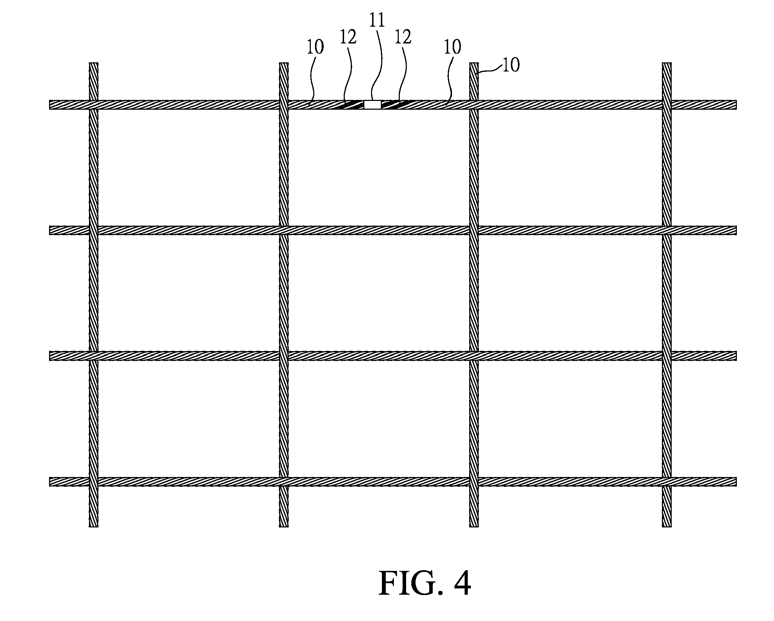

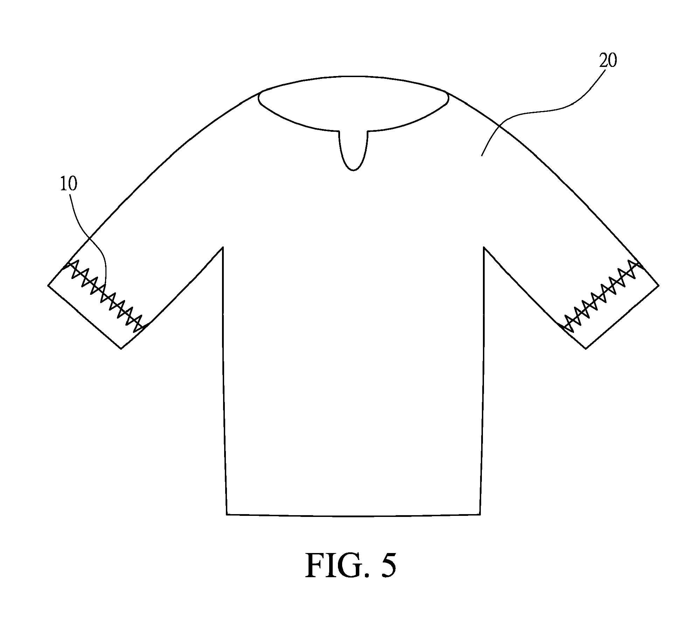

Figure 4 is a schematic view showing an example of application of the structure of the textile in accordance with the present invention and Figure 5 is another schematic view showing an example of application of the structure of the textile in accordance with the present invention. Referring to Figure 4, in a practical application, the antennas 12 are respectively twisted and combined with the yarns 10 to form a strand of yarns that includes the RFID chip therein. Further, in making clothing through for example weaving or knitting, the yarns that include the RFID chip therein can be used for weaving or knitting so that the clothing, after finished, comprises the RFID chip 11 therein (see Figure 5). The data contained in the RFID chip can be easily accessed through an external reader that works with the antennas.

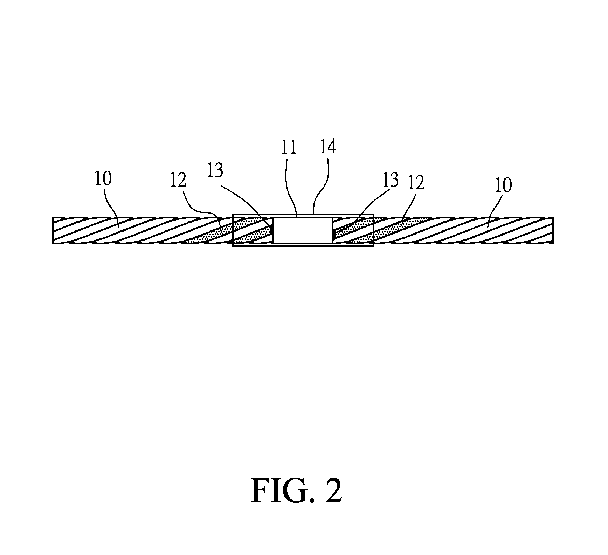

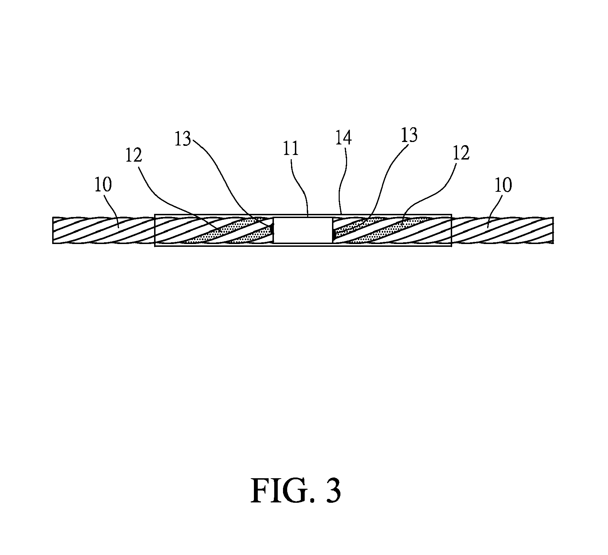

For simplification of the description, textile structures that are shown in Figures 2 and 3 and will be described hereinafter use the same reference numerals to designate components/parts similar to those of the structure shown in Figure 1 and repeated description will be omitted.

Figure 2 is a schematic, partial enlarged view showing a structure of a textile in accordance with a second embodiment of the present invention. As shown in Figure 2, in the instant embodiemnt, the struture and operation are identical to those of the above described first embodiment, but further comprises a protection layer 14, which encloses the RFID chip 11 and is extended to partially cover the antennas 12.

Figure 3 is a schematic, partial enlarged view showing a structure of a textile in accordance with a third embodiment of the present invention. As shown in Figure 3, in the instant embodiemnt, the struture and operation are identical to those of the above described first embodiment, but the protection layer 14 of the second embodiemnt is further extended to enclose the RFID chip 11 and also completely cover the antennas 12.

In summary, with the arrangement of the combination of the yarns 10, the RFID chip 11, and the antennas 12, the present invention provides advantages that no tactile perception of irregularity will be caused when a user touches and the comfortableness of wearing can be enhanced so as to improve the convenience and utilization thereof.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A textile structure (1), comprising:
two yarns (10);
a radio frequency identification (RFID) chip (11); and
two antennas (12), which are each electrically connected with the RFID chip (11), the antennas (12) being respectively combined with the yarns (10).

2. The textile structure as claimed in Claim **1** further comprising a protection layer (14), which encloses the RFID chip (11) and is extended to the antennas (12).

3. The textile structure as claimed in Claim **2,** wherein the protection layer (14) is extended to cover the yarns (10).

4. The textile structure as claimed in Claim **1,** wherein the antennas (12) are soldered to the RFID chip (11).

5. The textile structure as claimed in Claim **1,** wherein the antennas (12) are pressed to fix to the RFID chip (11).

6. The textile structure as claimed in Claim **1,** wherein the antennas (12) bonded to the RFID chip (11).

7. The textile structure as claimed in Claim **1,** wherein the antennas (12) are laminated to the RFID chip (11).

8. The textile structure as claimed in Claim **1,** wherein the antennas (12) are respectively twisted with the yarns (10) to form strands.

## Amended claims

### Amended claims in accordance with Rule 137(2) EPC.

1. A textile structure (1), comprising:
two yarns (10);
a radio frequency identification, RFID, chip (11); and
a dipole antenna (12) comprising two antenna segments , which are each
electrically connected with the RFID chip (11), the two antenna segments (12) being respectively twisted with the yarns (10) to form strands.

2. The textile structure as claimed in Claim 1 further comprising a protection layer (14), which encloses the RFID chip (11) and is extended to the dipole antenna (12).

3. The textile structure as claimed in Claim 2, wherein the protection layer (14) is extended to cover the yarns (10).

4. The textile structure as claimed in Claim 1, wherein the dipole antenna (12) is soldered to the RFID chip (11).

5. The textile structure as claimed in Claim 1, wherein the dipole antenna (12) is pressed to fix the RFID chip (11).

6. The textile structure as claimed in Claim 1, wherein the dipole antenna (12) is bonded to the RFID chip (11).

7. The textile structure as claimed in Claim 1, wherein the dipole antenna (12) is laminated to the RFID chip (11).
